# EUROPÄISCHE PATENTSCHRIFT

(11) **EP 3 718 400 B1**
(45) Veröffentlichungstag und Bekanntmachung des Hinweises auf die Patenterteilung: **07.06.2023**
(21) Anmeldenummer: 20164563.7
(22) Anmeldetag: 20.03.2020
(51) Int. Cl.: A01M 7/00

(54) **LANDWIRTSCHAFTLICHE VERTEILMASCHINE MIT EINEM VERTEILERGESTÄNGE**
AGRICULTURAL SPRAYER WITH A DISTRIBUTION BOOM
MACHINE D'ÉPANDAGE AGRICOLE DOTÉ D'UNE RAMPE D'ÉPANDAGE

(30) Priorität: 03.04.2019 DE 102019204775
(43) Veröffentlichungstag der Anmeldung: 07.10.2020
(73) Patentinhaber: Deere & Company, Moline, IL 61265 (US)
(72) Erfinder: Alders, Dirk, 68163 Mannheim (DE); Jung, Benedikt, 68163 Mannheim (DE); Meyer, Matthias, 68163 Mannheim (DE); Peeters, Willy, 68163 Mannheim (DE); Op Het Veld, Ivo, 68163 Mannheim (DE); Schuhmacher, Artur, 68163 Mannheim (DE); Jung, Kilian, 68163 Mannheim (DE); Seewig, Jörg, 68163 Mannheim (DE); Follmann, Viktor, 68163 Mannheim (DE)
(74) Vertreter: Dehnhardt, Florian Christopher

(56) Entgegenhaltungen:
- EP-A1- 3 072 379
- EP-A1- 3 357 333
- EP-A1- 3 440 934
- FR-A1- 3 019 969
- US-A1- 2011 282 554

## Beschreibung

Die Erfindung betrifft eine landwirtschaftliche Verteilmaschine nach dem Oberbegriff des Anspruchs 1.

### Stand der Technik

Derartige Verteilmaschinen, üblicherweise als Feldspritzen bezeichnet, dienen dazu, landwirtschaftliche Produkte auf einem Feld auszubringen. Die Feldspritzen können als selbstfahrende oder gezogene Fahrzeuge ausgeführt sein oder lösbar an einem Trägerfahrzeug (Ackerschlepper) angebracht werden. Sie umfassen ein relativ breites Verteilergestänge, das zum Transport einfaltbar ist und an dem Düsen zum Ausbringen des Produkts über die Breite des Verteilergestänges verteilt sind. Bei den Produkten handelt es sich üblicherweise um Flüssigkeiten, die zum Düngen auf dem Feld angebauter Pflanzen oder zur Bekämpfung von Krankheiten oder Schädlingen oder Unkraut dienen. In der Regel soll das Produkt in vorbestimmten Mengen je Flächeneinheit ausgetragen werden, die über ein Feld konstant sind oder standortspezifisch variieren können, wozu die Düsen auf einer im Vorab geplanten Ausbringmengenkarte und/oder durch Sensoren gesteuert geöffnet und geschlossen werden. Um die gewünschte Menge tatsächlich ausbringen zu können, ist es wichtig, dass ein die zur Produktausbringung dienenden Düsen halterndes Verteilergestänge in einer definierten Höhe über dem Boden bewegt wird. Ist es zu hoch, wird das Produkt über einen zu großen Bereich verteilt und ist das Verteilergestänge zu niedrig, wird das Produkt nur in einem zu kleinen Bereich abgegeben.

Die Positionierung des Verteilergestänges in der gewünschten Höhe oberhalb der Feldkontur wird durch mögliche Variationen der Feldkontur (d.h. unterschiedliche Höhen der Pflanzen über dem Boden und/oder nicht ebene Bodenkonturen) und durch Fahrzeugbewegungen, die sich als Störbewegungen auf das Verteilergestänge auswirken, erschwert. Um auf eine sich ändernde Feldkontur zu reagieren, weist das Verteilergestänge Freiheitsgrade und Aktoren auf, die eine Anpassung der Geometrie des Verteilergestänges an die Feldkontur ermöglichen. Üblicherweise kann ein mittleres Segment des Verteilergestänge um eine sich in Vorwärtsrichtung erstreckende Achse gegenüber einer gegenüber dem Fahrzeug höhenverstellbaren und um die Vorwärtsachse drehbaren Aufhängung durch einen Aktor gedreht und ein linker und rechter Ausleger jeweils durch einen Aktor um eine sich in Vorwärtsrichtung erstreckende Achse gegenüber dem mittleren Segment verschwenkt werden, wie z.B. in der EP 3 357 333 A1 beschrieben. Um Schwingbewegungen zu minimieren, werden Aufhängungssysteme mit Federn und Dämpfern zwischen dem Fahrzeug und der Aufhängung des mittleren Segments verwendet, die eine gedämpfte Drehbewegung zwischen dem Fahrzeug und dem mittleren Segment um die Vorwärtsachse erlauben.

Die Anpassung der Geometrie des Verteilergestänges an die Feldkontur erfolgt demnach durch drei Aktoren, von denen einer das mittlere Segment gegenüber dem Fahrzeug um die Vorwärtsachse dreht und die beiden anderen die Ausleger gegenüber dem mittleren Segment um die Vorwärtsachse drehen. Die Dämpfung der Drehachse der Aufhängung des mittleren Segments gegenüber dem Fahrzeug ist konstant oder variabel (EP 3 357 333 A1), und die Höhenverstellung der Aufhängung erfolgt in der Regel lediglich zu Beginn eines Arbeitsvorgangs zur Anpassung an die Pflanzenhöhe.

Es sind somit in der Regel drei Aktoren vorhanden, die zur Anpassung an die Feldkontur anzusteuern sind. Aufgrund der nicht-starren Aufhängung des mittleren Segments und der relativ großen Masse der Ausleger führt eine Verstellung eines der Aktoren eines Auslegers auch zu einer Bewegung des anderen, nicht verstellten Auslegers. Insbesondere dann, wenn die beiden Aktoren zur Verstellung der Ausleger unabhängig voneinander durch entsprechende Sensoren gesteuert in einer vorbestimmten Höhe über dem Pflanzenbestand oder dem Boden geführt werden, schwingen sich beide Ausleger (aufgrund der gegenseitigen Beeinflussung durch das mittlere Segment) gegenseitig auf, was zu einer Schwingung des Verteilergestänges führt und eine Positionsregelung der Ausleger verhindert oder zumindest erschwert.

Im Stand der Technik finden sich verschiedene Vorgehensweisen, um dieses Problem zu lösen. Es wurde vorgeschlagen, die Ausleger abhängig voneinander zu verstellen, d.h. beim Verstellen eines Auslegers auch den anderen Ausleger gegensinnig anzusteuern (EP 3 058 820 A1 mit symmetrischer Verstellung der Ausleger oder FR 3 019 969 A1 mit gegensinniger Verstellung eines Auslegers proportional abhängig von der Verstellung des anderen Auslegers), oder beide Ausleger durch einen äußeren Regelkreis zur Anpassung an die Feldkontur gleichsinnig anzusteuern und das mittlere Segment durch einen inneren Regelkreis, der zur Stabilisierung und Entkopplung der Ausleger dient, zu kontrollieren (EP 3 165 090 A1). Bei diesen Anordnungen wird jeweils ein Aktor (oder mehrere Aktoren) basierend auf einem Vergleich zwischen einem Sollwert (der auf einem oder mehreren Eingangsparametern beruhen kann) und einem Istwert verstellt; was auf einen so genannten Eingrößenregler (single input, single output, SISO) hinweist.

Man versucht demnach, ein System mit mehreren Eingangsgrößen, wozu u.a. die Höhen der Ausleger über der Feldkontur zählen, und mehreren sich gegenseitig beeinflussenden Ausgangsgrößen, wozu wenigstens die Aktoren zur Kontrolle der Ausleger gegenüber dem mittleren Segment zählen, auf separate Eingangs- und Stellgrößen zurückzuführen, sodass parallel bzw. kaskadiert arbeitende Eingrößenregler zum Einsatz kommen. In diesem Zusammenhang sei auf J. Anthonis et al., SVD H∞ Controller Design for an Active Horizontal Spray Boom Suspension, Proceedings of the 7th Mediterranean Conference on Control and Automation (MED99) Haifa, Israel - June 28-30, 1999; Seiten 90-102 verwiesen, wo eine Mehrgrößenregelung zur Dämpfung horizontaler Schwingungen in einem Ausleger einer Feldspritze in unabhängige, sich nicht gegenseitig beeinflussende Stellgrößen für Translation und Rotation zerlegt wird, um sie mit Eingrößenreglern bewerkstelligen zu können.

Diese Zerlegung in unabhängige Stellgrößen ist bei der oben beschriebenen Feldspritze aufgrund der gegenseitigen Beeinflussung der Eingangs- und Stellgrößen jedoch nicht vollständig möglich und eine Kontrolle der Feldspritze mit den im Stand der Technik vorgesehenen parallel bzw. kaskadiert arbeitenden Eingrößenreglern nicht optimal darstellbar.

Der Stand der Technik beschreibt auch Feldspritzen mit so genannten Mehrgrößenreglern. So erwähnt die EP 3 072 379 A1 eine Feldspritze mit einem aktorisch in Vorwärtsrichtung schwenkbaren und höhenverstellbaren Gestänge, das mit einem Mehrgrößenregler angesteuert wird, der zudem noch die Fahrgeschwindigkeit regelt. Diese Regelgrößen werden analog zu einem in der übrigen Beschreibung diskutierten, in Höhe und Neigung auf einen Sollwert verstellbaren Erntevorsatz derart kontrolliert, dass die Nickschwingungen des Fahrzeugs minimiert werden. Die vom Mehrgrößenregler gelöste Aufgabe betrifft hier, jedenfalls hinsichtlich der Kontrolle des Gestänges, jedoch kein Mehrgrößenproblem, denn die Höhe und Neigung des Gestänges sind voneinander unabhängige, sich nicht gegenseitig beeinflussende Größen.

Weiterhin beschreibt H. Ramon et al., Design of a multivariable electro-hydraulik compensator for active vibration control of a flexible spray boom, Acta horticulturae 406 (1996), Seiten 267-280 ein Verteilergestänge für eine Feldspritze, das in horizontaler Richtung durch aktiv angesteuerte Hydraulikzylinder schwingungsgedämpft werden soll. Zwei innere Regelkreise kontrollieren jeweils einen Hydraulikzylinder, der je einem Ausleger zugeordnet ist, basierend auf einer Rückkopplungsgröße (Stellkraft) und ein äußerer Regelkreis ermittelt durch einen Kalman-Filter, basierend auf Sensoren für die Bewegung der Ausleger, einen Schwingungszustand des Systems und gibt beiden inneren Regelkreise die vom Schwingungszustand abhängigen Stellgrößen vor. Vermutlich aufgrund der Komplexität des zur Erkennung des Schwingungszustands benötigten Modells sind die Autoren (vgl. J. Anthonis et al., a.a.O.) später auf die Zerlegung des Problems in unabhängige Stellgrößen für Translation und Rotation des Verteilergestänges übergegangen.

In der EP 3 440 934 A1 wird eine Verteilmaschine mit zweiteiligen Auslegern beschrieben, bei welcher ein Aktor zur Verstellung des Winkels des äußeren Teils des Auslegers um die Vorwärtsachse abhängig von der Verstellung eines Aktors zur Verstellung des inneren Teils um die Vorwärtsachse kontrolliert wird, um den äußeren Teil des Auslegers möglichst parallel zum Boden zu führen. Zudem kann, wenn die Neigung des gesamten Gestänges um die Vorwärtsachse verstellt wird, der äußere Teil nachgestellt werden. Als Eingangsgröße für die Verstellung des gesamten Gestänges dienen mit den inneren Teilen gekoppelte Sensoren zur Erfassung der Höhe über dem Feld und die Verstellung der äußeren Teile beruht auf mit den äußeren Teilen gekoppelten Sensoren zur Erfassung der Höhe über dem Feld (und auf der Neigung des gesamten Gestänges, wie beschrieben). Der Sensor zur Erfassung der Höhe des rechten inneren Teils beeinflusst demnach über die Verstellung des gesamten Gestänges um die Vorwärtsachse auch den Aktor zu Verstellung des äußeren linken Teils. Hierbei wird aber nicht berücksichtigt, dass die Verstellung jedes Aktors über die mechanische Kopplung durch die Teile der Ausleger auch die anderen Teile der Ausleger beeinflusst.

Die als gattungsbildend angesehene US 2011/0282554 A1 beschreibt eine Verteilmaschine mit einem linken und einem rechten Ausleger, deren Winkel um die Vorwärtsachse durch je einen Aktor kontrolliert werden, basierend auf der gemessenen Höhe der Ausleger über dem Feld. Um die gegenseitige Auswirkung der Verstellung eines Aktors auf den anderen Ausleger zu kompensieren, wird jedes Verstellsignal eines Aktors dem anderen Aktor zeitverzögert zugeführt. Die Verzögerungszeit und Proportionalitätskonstante werden durch Versuche ermittelt. Hier findet demnach eine Art von Zweigrößenregler Verwendung. Eine selbsttätige Verstellung des Mittelteils zwischen den Auslegern wird nicht beschrieben, und es ist auch nicht erkennbar, in welcher Weise sie mit der Verstellung der vorhandenen Aktoren gekoppelt werden könnte.

### Aufgabe

Die vorliegende Erfindung hat sich zur Aufgabe gemacht, eine Verteilmaschine der eingangs erwähnten Art dahingehend zu verbessern, dass die erwähnten Nachteile zumindest teilweise vermieden werden.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine landwirtschaftliche Verteilmaschine ist mit einem Verteilergestänge und einem sich auf dem Boden abstützenden Fahrgestell ausgestattet, das in einer Vorwärtsrichtung über ein Feld bewegbar ist, wobei:
das Verteilergestänge ein mittleres, beweglich am Fahrgestell abgestütztes Segment und zwei an jeweils einer Seite des mittleren Segments angeordnete Ausleger umfasst, die durch jeweils einen Aktor gegenüber dem mittleren Segment um eine sich in Vorwärtsrichtung erstreckende Achse verschwenkbar sind,
die Aktoren durch eine Steuereinrichtung ansteuerbar sind, der durch Sensoren bereitgestellte Signale hinsichtlich der relativen Position beider Ausleger gegenüber einer Feldkontur zuführbar sind, und welche betreibbar ist, die Aktoren basierend auf den Signalen im Sinne einer Einhaltung der Positionen der Ausleger in einer gewünschten Position über der Feldkontur anzusteuern,
und eine Verstellung eines Aktors aufgrund der mechanischen Kopplung der Ausleger durch das mittlere Segment auch eine Bewegung des jeweils anderen Auslegers zur Folge hat,
und die Steuereinrichtung einen Mehrgrößenregler umfasst, dem die Signale beider Sensoren als Eingangsgrößen zuführbar sind und der zur Bereitstellung von Stellsignalen für beide Aktoren eingerichtet ist, die jeweils von beiden Eingangsgrößen abhängen.

Es wird demnach ein Mehrgrößenregler verwendet, der die gegenseitige Beeinflussung der Aktoren bei der Berechnung der Stellsignale berücksichtigt, was die eingangs erwähnten Probleme zumindest teilweise behebt.

Das mittlere Segment ist durch einen dritten Aktor gegenüber dem Fahrgestell um eine sich in Vorwärtsrichtung erstreckende Achse verstellbar, dessen Stellsignal vom Mehrgrößenregler in Abhängigkeit von den beiden erwähnten Eingangsgrößen bereitstellbar ist. Dem Mehrgrößenregler ist zudem eine weitere Eingangsgröße zuführbar, welche den sensorisch erfassten Winkel des mittleren Segments gegenüber der Feldkontur repräsentiert, und betreibbar, die Stellsignale aller Aktoren jeweils abhängig von allen Eingangsgrößen zu erstellen.

Das mittlere Segment kann an einer Aufhängung befestigt sein, die gegenüber dem Fahrgestell um eine sich in Vorwärtsrichtung erstreckende Achse drehbar gelagert und durch eine Feder und/oder ein Dämpfungselement mit dem Fahrgestell gekoppelt ist.

Die Steuereinrichtung kann einen Zustandsregler umfassen, dem sensorisch erfasste Messgrößen hinsichtlich des Bewegungszustands der Ausleger und/oder des mittleren Segments und/oder der Aufhängung zuführbar sind und dessen Ausgangssignale mit den Ausgangssignalen des Mehrgrößenreglers zur Erzeugung der Stellgröße der Aktoren kombinierbar sind.

Die Steuereinrichtung kann alternativ oder zusätzlich eine Störgrößenaufschaltung umfassen, der sensorisch erfasste Signale hinsichtlich einer Bewegung des Fahrgestells zuführbar sind und dessen Ausgangssignale mit den Ausgangssignalen des Mehrgrößenreglers zur Erzeugung der Stellgröße der Aktoren kombinierbar sind.

Die Steuereinrichtung kann einen Kalman-Filter oder Beobachter umfassen, dem die Stellgrößen der Aktoren und die Messgrößen hinsichtlich des Bewegungszustands und/oder hinsichtlich einer Bewegung des Fahrgestells zuführbar sind und dessen Ausgangssignal als Eingangssignal der Störgrößenaufschaltung und/oder dem Zustandsregler zuführbar sind.

### Ausführungsbeispiel

In den Zeichnungen sind nachfolgend näher beschriebene Ausführungsbeispiele dargestellt. Es zeigt:
- Fig. 1: eine seitliche Ansicht einer als selbstfahrende Feldspritze ausgeführten Verteilmaschine,
- Fig. 2: eine rückwärtige Ansicht des ausgefahrenen Verteilergestänges der Verteilmaschine der Figur 1,
- Fig. 3: eine vergrößerte, rückwärtige Ansicht des mittleren Teils des Verteilergestänges der Figur 2,
- Fig. 4: ein Schema einer ersten Ausführungsform einer Steuereinrichtung, und
- Fig. 5: ein Schema einer zweiten Ausführungsform einer Steuereinrichtung.

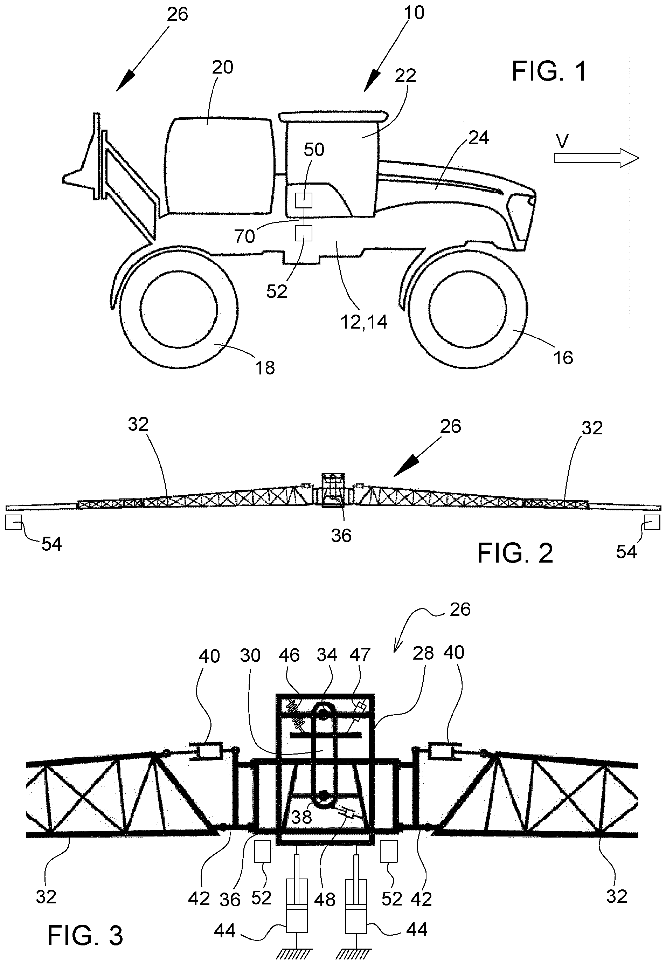

Die Figur 1 zeigt eine Verteilmaschine 10 zur Ausbringung von flüssigen Wirkstoffen in Form eines selbstfahrenden Fahrzeugs, das alternativ zur selbstfahrenden Ausführungsform als an einen Ackerschlepper anbaubares oder gezogenes Gerät ausgeführt sein könnte. Die Verteilmaschine 10 umfasst ein Fahrgestell 12 mit einem Rahmen 14, der sich auf vorderen Rädern 16 und hinteren Rädern 18 auf dem Erdboden abstützt. Die Räder 16, 18 können lenkbar und antreibbar sein. Auf dem Rahmen 14 stützen sich ein Tank 20 für die Wirkstoffe und eine Kabine 22 ab, vor der sich ein Motorraum 24 befindet. Die im Betrieb übliche Fahrtrichtung V im Betrieb ist in der Figur 1 nach rechts gerichtet. Selbstverständlich kann die Verteilmaschine .10 auch rückwärts fahren und dabei auch Sprizmittel ausbringen. Rückwärtig ist am Rahmen 14 der Verteilmaschine 10 ein neigungs- und höhenverstellbares Verteilergestänge 26 angebracht, das in den Figuren 2 und 3 in einer rückwärtigen Ansicht dargestellt ist.

Am Rahmen 14 ist ein durch gekoppelte Aktoren 44 in Form von Hydraulikzylindern in der Höhe verstellbarer Verstellrahmen 28 angebracht. An diesem Verstellrahmen 28 ist eine Aufhängung 30 um eine sich in Vorwärtsrichtung V erstreckende Achse 34 drehbar gelagert. An der Aufhängung 30 ist ein mittleres Segment 36 des Verteilergestänges 26 um eine sich in Vorwärtsrichtung V erstreckende Achse 38 drehbar gelagert. Zwei Ausleger 32 des Verteilergestänges 26 sind links und rechts an dem mittleren Segment 36 angebracht und über Aktoren 40 in Form von Hydraulikzylindern gegenüber dem mittleren Segment 36 um sich in Vorwärtsrichtung V erstreckende Achsen 42 verstellbar. Das mittlere Segment 36 und die beiden Ausleger 32 bilden zusammen das Verteilergestänge 26, das mit Düsen zur Ausbringung der Wirkstoffe aus dem Tank 20 versehen ist.

Die Aufhängung 30 ist gegenüber dem Verstellrahmen 28 drehbar um die Achse 34 gelagert und durch eine Feder 46 und einen Dämpfer 47 gegenüber einer Drehung um die Achse 34 gefedert und gedämpft. Die Feder 46 und der Dämpfer 47 könnte auch durch einen oder mehrere Hydraulikzylinder (nicht gezeigt) ersetzt oder ergänzt werden, die ihre Aufgabe übernehmen und eine konstante oder variable Dämpfung bereitstellen. Des Weiteren ist das mittlere Segment 36 des Verteilergestänges 26 gegenüber dem Pendel 30 ebenfalls mittels eines Aktors 48 in Form eines Hydraulikzylinders um die sich in Vorwärtsrichtung V erstreckende Achse 38 drehbar.

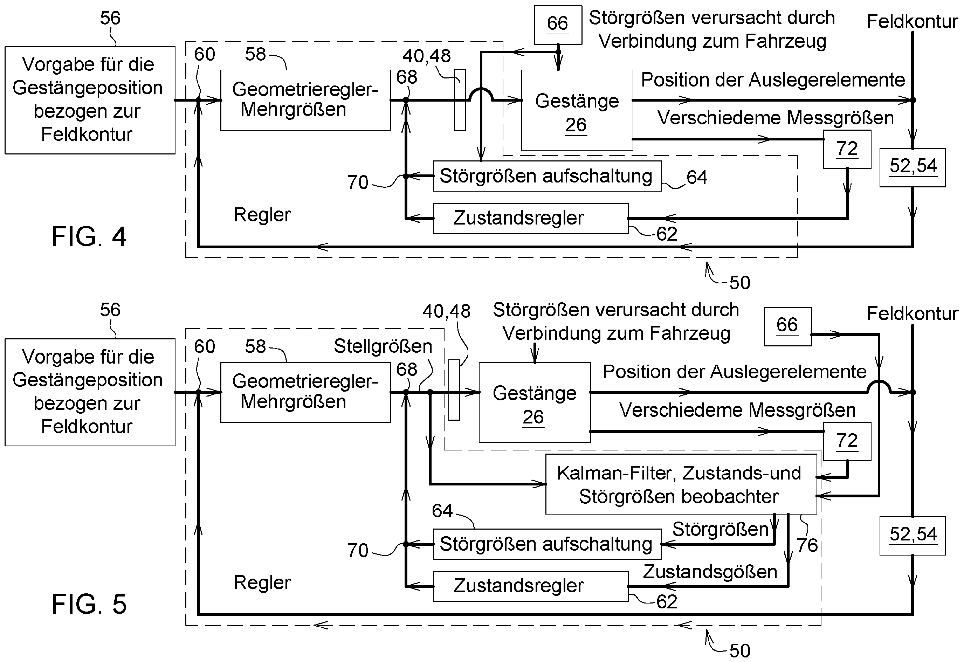

Eine Steuereinrichtung 50 (s. Figuren 4 und 5) ist über geeignete Ventile mit den Aktoren 40, 44 und 48 verbunden und kann zur Führung und Regelung des Verteilergestänges folgende Verstellungen vornehmen:
Höhenführung: Die Höhe des mittleren Segments 36 des Verteilergestänges 26 wird verstellt, indem der Verstellrahmen 28 gegenüber dem Rahmen 14 über eine Parallelkinematik mittels der hydraulisch betätigten Aktoren 44 nach oben und unten verstellt wird.
Versatz des Verteilergestänges 26 gegenüber der Aufhängung: Das mittlere Segment 36 des Verteilergestänges 26 wird gegenüber der Aufhängung 30 durch den Aktor 48 rotatorisch verstellt. Die Drehachse 38 verläuft dabei parallel zur Fahrzeuglängsachse und Vorwärtsrichtung V.
Anpassung der Verteilergestänge-Geometrie: Die beiden Ausleger 32 des Verteilergestänges 26 werden mittels der Aktoren 40 gegenüber dem mittleren Segment 36 des Verteilergestänges 26 verkippt. Die Drehachse 42 verläuft dabei parallel zur Fahrzeuglängsachse und Vorwärtsrichtung V.

Bisher nicht erwähnt wurde eine nicht gezeigte Aktorik, welche zum Verfahren des Verteilergestänges 26 zwischen gezeigter Arbeits- und eingefalteter Transportstellung benötigt wird. Zum Verfahren zwischen Arbeits- und Transportposition kann teilweise auf die bereits erläuterte Aktorik zurückgegriffen werden. So werden beispielsweise die Hydraulikzylinder 44 dazu verwendet, das Verteilergestänge 26, nachdem es eingeklappt wurde, in die Transportarretierung abzusenken.

Während die Aktoren 44 durch die Steuereinrichtung 50 in der Regel basierend auf Bedienereingaben zu Beginn eines Arbeitsvorgangs auf einem Feld verstellt und während des Ausbringens nicht verstellt werden, bewerkstelligt die Steuereinrichtung 50 während des Arbeitsvorgangs, bei dem Spritzmittel auf einem Feld verteilt werden, eine kontinuierliche Ansteuerung der Aktoren 40 und 48. Hierzu sind Sensoren 52, 54 vorgesehen, die als Entfernungsmesser (beispielsweise Ultraschallsensoren, Laserentfernungsmesser oder Stereokamera) ausgebildet sind und die Höhe der äußeren Enden der Ausleger 32 über dem Pflanzenbestand auf dem Feld oder dem Boden des Feldes erfassen (Sensoren 54) bzw. die Höhe der beiden seitlichen Enden des mittleren Segments 36 über dem Pflanzenbestand auf dem Feld oder dem Boden des Feldes erfassen. Die Steuereinrichtung 50 ist zudem mit einer Bedienerschnittstelle 56 verbunden, mit der eine Vorgabe für die Position (d.h. Höhe) des Verteilergestänges 26 über der Feldkontur (Pflanzendach oder Boden) durch den Bediener der Verteilmaschine 10 eingebbar ist, oder diese Vorgabe wird durch eine beliebige Automatik, die z.B. den Pflanzenzustand erkennen oder aus einer Datenbank entnehmen und daraus eine geeignete Arbeitshöhe des Verteilergestänges 26 ableiten kann, erzeugt.

Die Steuereinrichtung 50 umfasst in der Ausführungsform nach Figur 4 einen Geometrieregler, der als Mehrgrößenregler 58 ausgeführt ist und zur Erzeugung von Stellgrößen zur Ansteuerung der Aktoren 40 und 48 dient. Der Mehrgrößenregler 58 erhält Signale von den Sensoren 52 und 54. Hierbei werden die Signale der Sensoren 52 in ein einziges Signal umgerechnet, das die Drehwinkeldifferenz zwischen dem mittleren Segment 36 und der Feldkontur angibt, d.h. die Abweichung des mittleren Segments 36 von einer Ausrichtung parallel zur Feldkontur. Diese drei Signale der Sensoren 52, 54 hinsichtlich der Höhe der äußeren Enden der Ausleger 32 und der Ausrichtung des mittleren Segments 36 gegenüber der Feldkontur werden durch einen Subtrahierer 60 mit dem (durch die Bedienerschnittstelle 56 oder Automatik vorgegebenen) Sollwert für die Höhe, die in der Regel für beide Ausleger 32 gleich ist, und einem Sollwert des Winkels des mittleren Segments 36 gegenüber der Feldkontur, der üblicherweise 0° ist, verglichen und eventuelle Abweichungen der Istwerte von den Sollwerten werden als Eingangsgrößen dem Mehrgrößenregler 58 zugeführt.

Der Mehrgrößenregler 58 erzeugt, basierend auf den (von den Signalen der Sensoren 52, 54 abhängigen) Eingangsgrößen, die drei voneinander unabhängigen Stellgrößen für die Aktoren 40 und 48. Hierbei hängt jede der Stellgrößen von allen drei Eingangsgrößen ab. Der Mehrgrößenregler 58 berücksichtigt demnach, welchen Einfluss jede Eingangsgröße auf jede Stellgröße hat, um die gegenseitige mechanische Beeinflussung der Aktoren 40, 48 zu berücksichtigen. Wenn demnach nur der rechte Sensor 54 eine Abweichung von der gewünschten Höhe erfasst, wird nicht nur der rechte Aktor 40 verstellt, um die Abweichung auszugleichen, sondern auch der Aktor 48 verstellt (da die Verstellung des rechten Aktors 40 auch zu einer Änderung der Neigung des mittleren Segments 36 führt, welches durch die Feder 46 und den Dämpfer 47 an der Aufhängung 30 angebracht ist, und der linke Aktor 40 verstellt, da sich hierbei auch die Neigung des mittleren Segments 36 ändert, was zu einer Bewegung des linken Auslegers 32 führt, der am mittleren Segment 36 aufgehängt ist. Analog werden beide Aktoren 40 verstellt, wenn die Sensoren 52 eine Abweichung der seitlichen Neigung des mittleren Segments 36 vom Sollwert erfassen, und der rechte Aktor 40 und der Aktor 48, wenn der linke Sensor 54 eine Abweichung vom Sollwert erfasst. Im Mehrgrößenregler 58 werden demnach die Abhängigkeiten der Eingangs- und Ausgangswerte voneinander berücksichtigt und jede Stellgröße hängt von jeder Eingangsgröße ab. Der Mehrgrößenregler 58 ist insbesondere ein mehrdimensionaler PID-Regler, worunter auch Untergruppen wie PD- oder PI-Regler fallen.

Demnach werden hier die Regelungsprinzipien eines Mehrgrößenreglers 58 auf das Verteilergestänge 26 angewandt. Der Mehrgrößenregler 58 ist in der Lage, die Aktoren 40 und 48 basierend auf den Signalen der Sensoren 52 und 54 anzusteuern, und dabei die gegenseitige Beeinflussung der Aktoren 40, 48 zu berücksichtigen. Die Hauptaufgabe, die der als Mehrgrößenregler 58 ausgeführte Geometrieregler hier erledigen muss, ist die Ausleger 32 und das mittlere Segment 36 immer wieder zur Einhaltung der Sollkontur hinzuregeln. Hierfür könnte man im einfachsten Fall eine 3x3 Matrix mit Einträgen auf der Hauptdiagonalen verwenden, welche mit dem (aus den drei erwähnten Eingangsgrößen bestehenden) Eingangsvektor multipliziert wird, um den Stellgrößenvektor zu erhalten. Der Mehrgrößenregler 58 könnte in einer weitergehenden Ausführungsform ein mathematisches Modell des zu regelnden Systems enthalten, das wiedergibt, welche Auswirkung jede Eingangsgröße auf jede Stellgröße hat und durch Messungen oder theoretische Betrachtungen erstellt werden kann.

Bei der Ausführungsform nach Figur 4 sind zudem ein Zustandsregler 62 und eine optionale Störgrößenaufschaltung 64 vorgesehen, deren Ausgangswerte über Addierer 70 und einen Subtrahierer 68 den Stellsignalen des Mehrgrößenreglers 58 aufgeschaltet werden. Der Zustandsregler 62 kann anhand durch Sensoren 72 (z.B. Potentiometer oder Trägheitssensoren) erfasster Messgrößen, die beispielsweise die Drehwinkel und/oder Drehwinkelgeschwindigkeiten der Ausleger 32, des mittleren Segments 36 und der Aufhängung 30 und/oder den Druck in den Aktoren 40, 48 erfassen können, einen Bewegungszustand des Verteilergestänges 26 bestimmen oder abschätzen und daraus abgeleitete Korrekturen zur Verbesserung des Bewegungszustands des Verteilergestänges 26 dem Stellsignal des Mehrgrößenreglers als Stellsignal an die Aktoren 40, 48 zufügen. Analog kann die Störgrößenaufschaltung 64 einen Zustand des Fahrgestells 12 (z.B. dessen Neigung in seitlicher Richtung, in Vorwärtsrichtung und um die Hochachse, die Auslenkung der Feder 46 oder des Dämpfers 47, den Druck im Aktor 44 und/oder den Druck in einer hydraulischen Fahrwerksaufhängung und/oder die Auslenkung einer Federung des Fahrwerks des Fahrgestells 12) durch Sensoren 66 erfassen und ggf. sich auf das Verteilergestänge 26 auswirkende Änderungen und daraus resultierende, mögliche Korrekturen zur Verbesserung der Konstanz der Position des Verteilergestänges 26 gegenüber dem Feld dem Stellsignal des Mehrgrößenreglers als Stellsignal an die Aktoren 40, 48 zufügen.

Der Zustandsregler 62 und die Störgrößenaufschaltung 64 stellen optionale Verbesserungen bereit, um den jeweiligen Bewegungszustand des Verteilergestänges 26 und/oder des Fahrgestells 12 mit zu berücksichtigen. Derartige Anordnungen sind bei Mehrgrößenregelungen an sich gebräuchlich (vgl. G. Weihrich, Mehrgrößen-Zustandsregelung unter Einwirkung von Stör- und Führungssignalen, Regelungstechnik 1977, Seiten 166 bis 172 und 204 bis 208). Die Anordnung der Zustandsregler 62 und die Störgrößenaufschaltung 64 nach Figur 4 ist anwendbar, wenn die verwendeten Sensoren 72 und ggf. 66 in der Lage sind, die Zustandsgrößen (Sensoren 72) und Störgrößen (Sensoren 66) hinreichend gut messtechnisch zu erfassen.

Sind hingegen nicht alle Zustandsgrößen und/oder Störgrößen hinreichend genau erfassbar, kann, wie bei der Ausführungsform nach Figur 5, zusätzlich ein Kalman-Filter und/oder Zustands- und Störgrößenbeobachter 76 vorhanden sein, der Eingangssignale von den Sensoren 66 und 72 und die Stellgrößen der Aktoren 40, 48 erhält und den Zustandsregler 62 und die Störgrößenaufschaltung mit den Zustands- und Störgrößen beaufschlagt. Bei der Anordnung nach Figur 5 kann wahlweise ein Kalman-Filter oder ein Zustands- und/oder Störgrößenbeobachter eingesetzt werden. Der Kalman-Filter kann zum Einsatz kommen, wenn alle Zustandsgrößen messbar, jedoch verrauscht sind. Der Zustandsbeobachter kommt zum Einsatz, wenn nur ein Teil der Zustandsgrößen messbar ist; er leitet die anderen Zustandsgrößen dann aus den verfügbaren Messgrößen ab. Analog kann der Störgrößenbeobachter eingesetzt werden, falls die Störgrößen nicht oder nur teilweise messbar sind.

Zusammenfassend kann angemerkt werden, dass die Komponenten der Regelung folgende Aufgaben haben:
Geometrieregler (Mehrgrößenregler (58): Einhaltung der Positionen der Ausleger 32 und des mittleren Segments 36 in einer gewünschten Position über der Feldkontur.
Zustandsregler 62: Stabilisierung des Gestänges mit Auslegern 32 und mittlerem Segment 36.
Störgrößenaufschaltung 64: Vorausahnende Vorsteuerung des Gestänges.

Um darüber hinaus die Störbewegungen von der Fahrspur auf das Gestänge zu minimieren, müssen alle drei erwähnten Regler korrekt zueinander parametriert werden. Für diese Aufgabe sind der Zustandsregler 62 und die Störgrößenaufschaltung 64 entscheidend.

Es sei noch angemerkt, dass die (sämtlich relativ dick eingezeichneten) Pfeile in den Figuren 4 und 5 jeweils darauf hinweisen, dass jeweils mehrere, unterschiedliche Signale übertragen werden. Die Aktoren 40, 48 werden hier als Hydraulikzylinder beschrieben, könnten aber durch Elektromotoren oder Pneumatikzylinder oder so genannte pneumatische oder hydraulische Muskeln ersetzt werden.

## Patentansprüche

1. Landwirtschaftliche Verteilmaschine (10) mit einem Verteilergestänge (26) und einem sich auf dem Boden abstützenden Fahrgestell (12), das in einer Vorwärtsrichtung über ein Feld bewegbar ist, wobei:
das Verteilergestänge (26) ein mittleres, beweglich am Fahrgestell (12) abgestütztes Segment (36) und zwei an jeweils einer Seite des mittleren Segments (36) angeordnete Ausleger (32) umfasst, die durch jeweils einen Aktor (40) gegenüber dem mittleren Segment (36) um eine sich in Vorwärtsrichtung erstreckende Achse (42) verschwenkbar sind,
die Aktoren (40) durch eine Steuereinrichtung (50) ansteuerbar sind, der durch Sensoren (54) bereitgestellte Signale hinsichtlich der relativen Position beider Ausleger (32) gegenüber einer Feldkontur zuführbar sind, und welche betreibbar ist, die Aktoren (40) basierend auf den Signalen im Sinne einer Einhaltung der Positionen der Ausleger (32) in einer gewünschten Position über der Feldkontur anzusteuern,
eine Verstellung eines Aktors (40) aufgrund der mechanischen Kopplung der Ausleger (32) durch das mittlere Segment (36) auch eine Bewegung des jeweils anderen Auslegers (32) zur Folge hat,
und die Steuereinrichtung (50) einen Mehrgrößenregler (58) umfasst, dem die Signale beider Sensoren (54) als Eingangsgrößen zuführbar sind und der zur Bereitstellung von Stellsignalen für beide Aktoren (40) eingerichtet ist, die jeweils von beiden Eingangsgrößen abhängen und der die gegenseitige Beeinflussung der Aktoren bei der Berechnung der Stellsignale berücksichtigt,
**dadurch gekennzeichnet, dass** das mittlere Segment (36) durch einen dritten Aktor (48) gegenüber dem Fahrgestell (12) um eine sich in Vorwärtsrichtung erstreckende Achse (38) verstellbar ist, dessen Stellsignal vom Mehrgrößenregler (58) in Abhängigkeit von beiden Eingangsgrößen bereitstellbar ist,
und dass dem Mehrgrößenregler (58) eine weitere Eingangsgröße zuführbar ist, welche den sensorisch erfassten Winkel des mittleren Segments (36) gegenüber der Feldkontur repräsentiert, und der Mehrgrößenregler (58) betreibbar ist, die Stellsignale aller Aktoren (40, 48) jeweils abhängig von allen Eingangsgrößen zu erstellen.

2. Verteilmaschine (10) nach Anspruch 1, wobei das mittlere Segment (36) an einer Aufhängung (30) befestigt ist, die gegenüber dem Fahrgestell (12) um eine sich in Vorwärtsrichtung erstreckende Achse (34) drehbar gelagert und durch eine Feder (46) und/oder ein Dämpfungselement (47) mit dem Fahrgestell (12) gekoppelt ist.

3. Verteilmaschine (10) nach einem der Ansprüche 1 oder 2, wobei die Steuereinrichtung (50) einen Zustandsregler (62) umfasst, dem sensorisch erfasste Messgrößen hinsichtlich des Bewegungszustands der Ausleger (32) und/oder des mittleren Segments (36) und/oder der Aufhängung (30) zuführbar sind und dessen Ausgangssignale mit den Ausgangssignalen des Mehrgrößenreglers (58) zur Erzeugung der Stellgröße der Aktoren (40, 48) kombinierbar sind.

4. Verteilmaschine (10) nach einem der Ansprüche 1 bis 3, wobei die Steuereinrichtung (50) eine Störgrößenaufschaltung (64) umfasst, der sensorisch erfasste Signale hinsichtlich einer Bewegung des Fahrgestells (12) zuführbar sind und dessen Ausgangssignale mit den Ausgangssignalen des Mehrgrößenreglers (58) zur Erzeugung der Stellgröße der Aktoren (40, 48) kombinierbar sind.

5. Verteilmaschine (10) nach Anspruch 3 oder 4, wobei die Steuereinrichtung (50) einen Kalman-Filter oder Beobachter (76) umfasst, dem die Stellgrößen der Aktoren (40, 48) und die Messgrößen hinsichtlich des Bewegungszustands und/oder hinsichtlich einer Bewegung des Fahrgestells (12) zuführbar sind und dessen Ausgangssignal als Eingangssignal der Störgrößenaufschaltung (64) und/oder dem Zustandsregler (62) zuführbar sind.

## Claims

1. Agricultural sprayer (10) having a sprayer linkage (26) and a chassis (12) which is supported on the ground and can be moved over a field in a forward direction, wherein:
- the sprayer linkage (26) comprises a central segment (36) movably supported on the chassis (12) and two booms (32) respectively arranged on a side of the central segment (36), which can each be pivoted by an actuator (40) with respect to the central segment (36) about an axis (42) extending in the forward direction,
- the actuators (40) can be controlled by a control device (50), which can be supplied with signals provided by sensors (54) with regard to the relative position of both booms (32) with respect to a field contour, and which can be operated to control the actuators (40) on the basis of the signals with the effect of maintaining the positions of the booms (32) in a desired position over the field contour,
an adjustment of one actuator (40) also results in a movement of the respective other boom (32) because of the mechanical coupling of the booms (32) by the central segment (36),
and the control device (50) comprises a multivariable controller (58), which can be supplied with the signals from both sensors (54) as input variables and which is set up to provide control signals for both actuators (40), each of which depends on both input variables, and which considers the mutual influence of the actuators when calculating the control signals,
**characterized in that** the central segment (36) can be adjusted with respect to the chassis (12) about an axis (38) extending in the forward direction by a third actuator (48), the control signal of which can be provided by the multivariable controller (58) as a function of both input variables,
and **in that** the multivariable controller (58) can be supplied with a further input variable, which represents the sensor-detected angle of the central segment (36) with respect to the field contour, and the multivariable controller (58) can be operated to create the control signals of all the actuators (40, 48) in each case as a function of all the input variables.

2. Sprayer (10) according to Claim 1, wherein the central segment (36) is fixed to a suspension (30) which is mounted such that it can rotate with respect to the chassis (12) about an axis (34) extending in the forward direction and is coupled to the chassis (12) by a spring (46) and/or a damping element (47).

3. Sprayer (10) according to either of Claims 1 and 2, wherein the control device (50) comprises a state controller (62), which can be supplied with sensor-detected measured variables with regard to the state of movement of the booms (32) and/or of the central segment (36) and/or of the suspension (30), and the output signals from which can be combined with the output signals from the multivariable controller (58) to generate the control variable of the actuators (40, 48).

4. Sprayer (10) according to one of Claims 1 to 3, wherein the control device (50) comprises feedforward control (64), which can be supplied with sensor-detected signals with regard to a movement of the chassis (12), and the output signals from which can be combined with the output signals from the multivariable controller (58) to generate the control variable of the actuators (40, 48) .

5. Sprayer (10) according to Claim 3 or 4, wherein the control device (50) comprises a Kalman filter or observer (76), which can be supplied with the control variables of the actuators (40, 48) and the measured variables with regard to the state of movement and/or with regard to a movement of the chassis (12), and the output signal from which can be supplied to the feedforward control (64) and/or the state controller (62) as an input signal.

## Revendications

1. Épandeur agricole (10) comprenant une rampe d'épandage (26) et un mécanisme de roulement (12) supporté par le sol et mobile dans une direction vers l'avant à travers un champ,
la rampe d'épandage (26) comprenant un segment médian (36), supporté de manière mobile par le mécanisme de roulement (12), et deux flèches (32) qui sont disposées de chaque côté du segment médian (36) et qui peuvent pivoter sur un axe (42), s'étendant vers l'avant, par rapport au segment médian (36) par le biais d'un actionneur (40),
les actionneurs (40) pouvant être commandés par un dispositif de commande (50) auquel peuvent être amenés des signaux fournis par des capteurs (54) et relatifs à la position relative des deux flèches (32) par rapport à un contour de champ et qui peut être actionné pour commander les actionneurs (40) sur la base des signaux en termes de maintien des positions des flèches (32) dans une position souhaitée au-dessus du contour de champ,
un réglage d'un actionneur (40) dû à l'accouplement mécanique des flèches (32) par le biais du segment médian (36) ayant pour conséquence également un mouvement de l'autre flèche respective (32),
et le dispositif de commande (50) comprenant un régulateur à variables multiples (58) auquel les signaux des deux capteurs (54) peuvent être amenés comme variables d'entrée et qui est conçu pour fournir aux deux actionneurs (40) des signaux de réglage qui dépendent chacun de deux variables d'entrée et qui prend en compte l'influence mutuelle des actionneurs lors du calcul des signaux de réglage,
**caractérisé en ce que** le segment médian (36) est réglable autour d'un axe (38) s'étendant vers l'avant par rapport au mécanisme de roulement (12) par le biais d'un troisième actionneur (48) dont le signal de réglage peut être fourni par le régulateur à variables multiples (58) en fonction des deux variables d'entrée,
et **en ce que** le régulateur à variables multiples (58) peut recevoir une autre variable d'entrée qui représente l'angle, détecté par capteur, du segment médian (36) par rapport au contour de champ, et le régulateur à variables multiples (58) peut être actionné pour générer les signaux de réglage de tous les actionneurs (40, 48) en fonction de toutes les variables d'entrée.

2. Épandeur (10) selon la revendication 1, le segment médian (36) étant fixé à une suspension (30) qui est supportée par rapport au mécanisme de roulement (12) de manière rotative sur d'un axe s'étendant vers l'avant (34) et étant accouplé au mécanisme de roulement (12) par le biais d'un ressort (46) et/ou d'un élément amortisseur (47).

3. Épandeur (10) selon l'une des revendications 1 ou 2, le dispositif de commande (50) comprenant un régulateur d'état (62) auquel peuvent être amenées des grandeurs de mesure détectées par capteur et relatives à l'état de mouvement de la flèche (32) et/ou du segment médian (36) et/ou de la suspension (30) et dont les signaux de sortie peuvent être combinés aux signaux de sortie du régulateur à variables multiples (58) pour générer la grandeur de réglage des actionneurs (40, 48) .

4. Épandeur (10) selon l'une des revendications 1 à 3, le dispositif de commande (50) comprenant une compensation de perturbation (64) à laquelle peuvent être amenés des signaux détectés par capteur et relatifs à un mouvement du mécanisme de roulement (12) et dont les signaux de sortie sont combinés à des signaux de sortie du régulateur à variables multiples (58) pour générer la grandeur de réglage des actionneurs (40, 48).

5. Épandeur (10) selon la revendication 3 ou 4, le dispositif de commande (50) comprenant un filtre ou observateur de Kalman (76) auquel peuvent être amenées les grandeurs de réglage des actionneurs (40, 48) et les grandeurs de mesure relatives à l'état de mouvement et/ou relatives à un mouvement du mécanisme de roulement (12) et dont le signal de sortie peut être amené comme signal d'entrée à la compensation de perturbation (64) et/ou au régulateur d'état (62).
